# EUROPEAN PATENT APPLICATION

(11) **EP 1 681 199 A1**
(43) Date of publication of application: **19.07.2006**
(21) Application number: 04791991.5
(22) Date of filing: 01.10.2004
(51) Int. Cl.: B60N 2/54, B60N 2/52

(54) **VEHICLE SEAT**

(30) Priority: 02.10.2003 JP 2003344159
(71) Applicant: TS Tech Co., Ltd, Asaka-shi, Saitama 351-0012 (JP); OILES CORPORATION, Tokyo 105-0012 (JP)
(72) Inventor: TAKEI, Yasuchika, TS Tech Co., Ltd., Shioya-gun, Tochigi 3291217 (JP); SUGIYAMA, Shinji, TS Tech Co., Ltd., Shioya-gun, Tochigi 3291217 (JP); HARADA, Yoshihiro, Oiles Corporation, Tokyo 1050012 (JP)
(74) Representative: Wilson Gunn
(86) International application number: PCT/JP2004/014524
(87) International publication number: WO 2005/032881

(57) **Abstract**

A vehicle seat includes a base frame (14) attached to a vehicle body, a plate-like movable plate (13) mounted to the base frame by a front mounting shaft (16), and a cushioning mechanism (18) disposed between the base frame and the movable plate. The cushioning mechanism includes an upper connector (21) connected to the movable plate and a lower connector (24) connected to the base frame such that the upper connector and the lower connector are coupled to each other by a viscous material damper (32) and a spring (33). The viscous material damper is adapted to apply resistance to relative movement of the upper connector and lower connector and the spring is adapted to receive and support a load acting on the lower connector from the upper connector.

## Description

### TECHNICAL FIELD

The present invention relates to a vehicle seat.

### BACKGROUND ART

A typical known vehicle seat includes a seat bottom and a seat back. Cushioning means are attached to the seat bottom and the seat back. Each cushioning means comprises an elastic member such as a polyurethane foam, and zigzag springs. The functions of the cushioning means are to elastically and comfortably support the weight of a vehicle seat occupant and to absorb vibrations caused during the running of the vehicle.

In order to increase the efficiency in absorbing vibrations caused during the running of the vehicle, vehicle seats furnished with a damper between the seat bottom and a base frame supporting the seat bottom have been proposed (refer to Japanese Patent Application Laid-Open No. 10-129322).
[Patent Document 1] JP 10-129322A

### DISCLOSURE OF THE INVENTION

In conventional vehicle seats, a large load is mainly absorbed by the zigzag springs disposed in the seat bottom, and vibrations during the running of the vehicle are mainly absorbed by the elastic member. Accordingly, conventional cushioning means need both the zigzag springs and the thick elastic member. In addition, since the zigzag springs are greatly bent when absorbing the large load, the seat bottom needs a sufficient space in which the zigzag springs are movable. Accordingly, conventional seat bottoms are vertically very thick.

Further, vehicle seats using the damper require a complicated mechanism for attaching the damper. This leads to a thicker seat bottom.

It is therefore an object of the invention to provide a vehicle seat designed such that the thickness of the seat bottom is decreased without degrading the function of absorbing vibrations caused during the running of the vehicle.

### BRIEF DESCRIPTION OF THE DRAWINGS

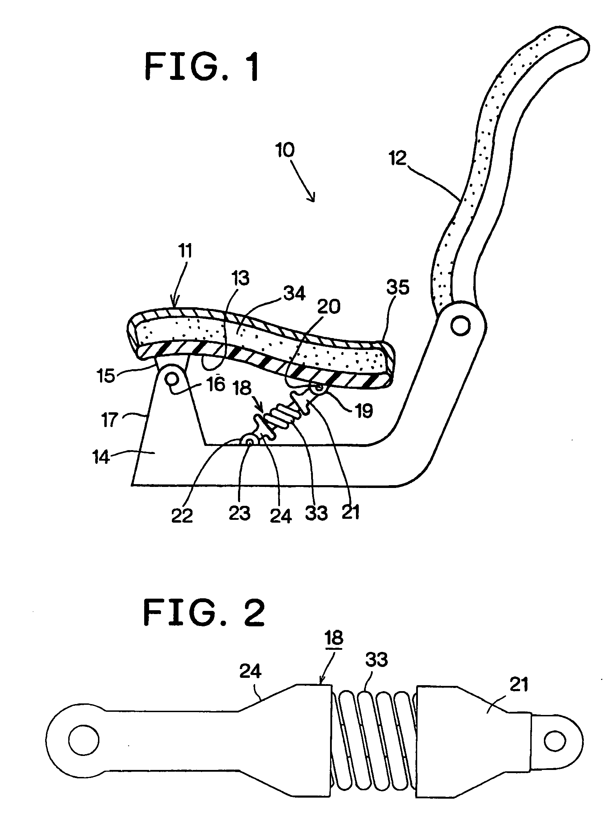

Fig. 1 is a partial longitudinal sectional view of a vehicle seat according to the present invention;
Fig. 2 is a side view of a cushioning mechanism according to the invention;
Fig. 3 is an enlarged sectional view of the cushioning mechanism;
Fig. 4 is a graph illustrating the damping characteristics of a viscous material damper of the cushioning mechanism and the damping characteristics of a conventional elastic member using a polyurethane foam; and
Fig. 5 is a partial longitudinal sectional view of the vehicle seat according to the invention, in which a thin elastic member is mounted on a movable plate.

### BEST MODES FOR CARRYING OUT THE INVENTION

Referring to the accompanying drawings, there will be described an embodiment of the present invention. A vehicle seat 10 according to the present invention includes a seat bottom 11 and a seat back 12. The seat bottom 11 has a plate-like movable plate 13, and a base frame 14 attached to a vehicle body. The base frame 14 is slidably attached to the vehicle body preferably. A front mounting portion 15 of the movable plate 13 is rotatably supported by a mounting shaft 16 which is mounted in a front upright bracket 17 of the base frame 14. The movable plate 13 is swingable in either direction about the mounting shaft 16.

Disposed between the movable plate 13 and the base frame 14 is a cushioning mechanism 18. The cushioning mechanism 18 includes an upper connector 21 fixed by a shaft 20 to a rear mounting portion 19 formed on the rear underside of the movable plate 13, and a lower connector 24 fixed by a shaft 23 to an upright bracket 22 formed on the upper face of the base frame 14. The upright bracket 22 is located further forward than the rear mounting portion 19. The direction of the length of the cushioning mechanism 18 is made to coincide with the track of the movement of the rear section of the movable plate 13 to the maximum.

The upper connector 21 has a rod 25 extending toward the lower connector 24. The rod 25 is inserted into a sleeve 26 of the lower connector 24, and a large-diameter stopper 27 is attached to the leading end of the rod 25. A cylindrical member 28 whose inside diameter is slightly greater than the inside diameter of the sleeve 26 is connected to the leading end of the sleeve 26 and, thus, a cylindrical chamber 29 is defined between the sleeve 26 and the rod 25. A stopper 30 is attached to the end of the cylindrical member 28. A viscous material D made of a viscous fluid, viscous elastic member, or the like is sealed into the cylindrical chamber 29. Reference numeral 31 refers to a sealing member. A viscous material damper 32 comprises the rod 25 of the upper connector 21, the cylindrical member 28 of the lower connector 24, and the viscous body D.

The cushioning mechanism 18 has a spring 33 disposed between the upper connector 21 and the lower connector 24. The spring 33 is disposed around the viscous material damper 32. The spring 33 elastically bears a load applied to the movable plate 13.

When the rod 25 moves in the cylindrical chamber 29 due to a load applied to the movable plate 13, the viscous material damper 32 damps vibrations by contact resistance between the rod 25 and the viscous material D disposed in the cylindrical chamber 29. The viscosity of the viscous material D increases and decreases with the speed of movement of the rod 25. In other words, when the speed of movement of the rod 25 is high, the contact resistance becomes large and consequently the damping force of the viscous material damper 32 also becomes large. Conversely when the speed of movement of the rod 25 is low, the contact resistance becomes small and consequently the damping force of the viscous material damper 32 also becomes small. Accordingly, when the spring 33 is greatly compressed due to a large load applied to the movable plate 13, large resistance from the viscous material damper 32 decreases the speed of movement of the rod 25. When the spring 33 is slightly compressed by a small load applied to the movable plate 13, the speed of movement of the rod 25 is decreased less as a result of the smaller resistance. Thus, the vertical vibrations of the movable plate 13 are caused to smoothly diminish.

One cushioning mechanism 18 is preferably disposed on each of the left and right sides of the movable plate 13.

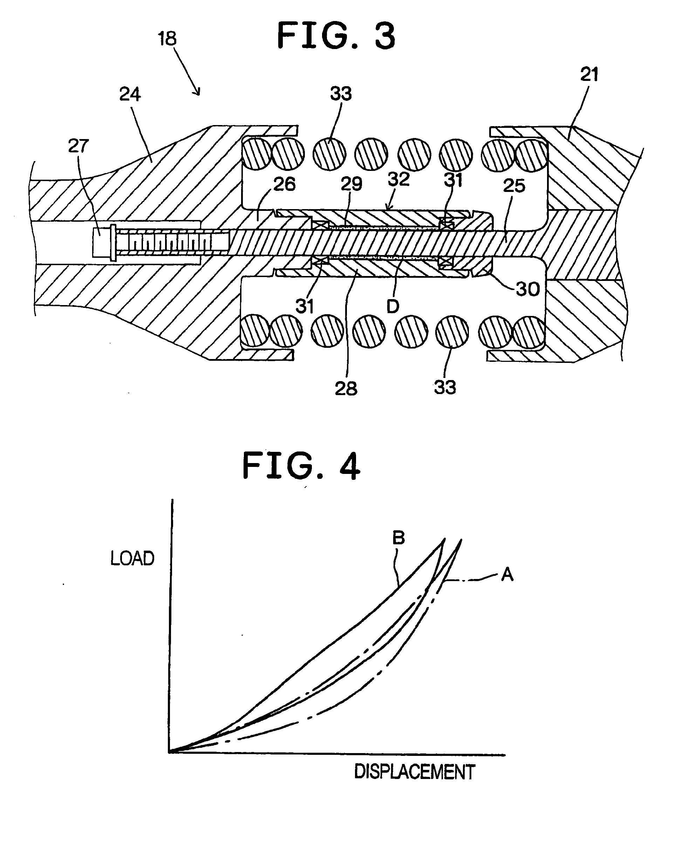

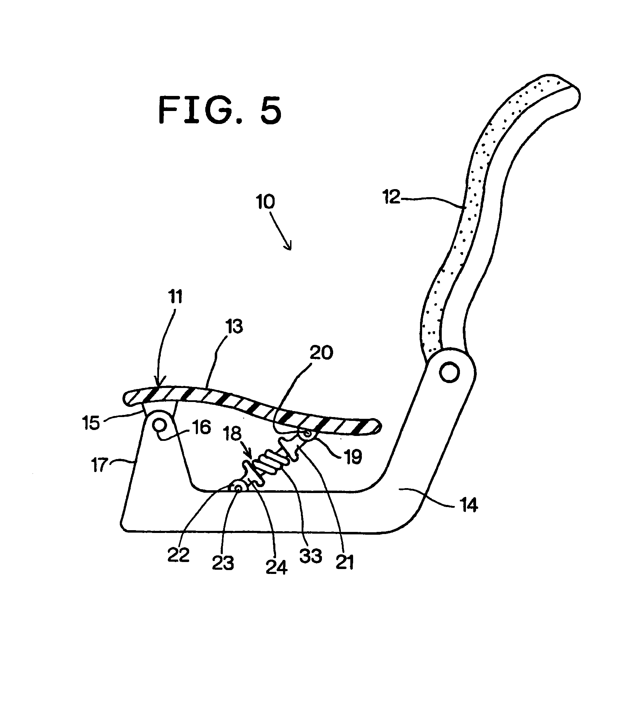

Fig. 4 shows the damping characteristics A of the viscous material damper 32 and the damping characteristics B of a conventional elastic member, composed of a material such as urethane foam, which is mounted on a seat bottom. As is apparent from the illustration, the viscous material damper 32 has damping characteristics almost identical to those of the conventional elastic member. This eliminates the need for the movable plate 13 to have a thick elastic member for absorbing a load shock. Accordingly, it is enough to furnish the movable plate 13 with a thin elastic member 34, if required, as shown in Fig. 5. According to the invention, even though the vehicle seat uses the thin elastic member 34, an occupant in the vehicle seat feels adequately comfortable on account of the function of the cushioning mechanism 18. In addition, reference numeral 35 refers to a cover sheet for the elastic member 34.

In conventional vehicle seats, a large load is mainly absorbed by the zigzag springs disposed in the seat bottom, and vibrations during the running of the vehicle are mainly absorbed by the elastic member. Accordingly, known cushioning means require both the zigzag springs and the thick elastic member. In addition, since the zigzag springs are largely distorted when absorbing a large load, the seat bottom needs sufficient space for the zigzag springs to move. Accordingly, conventional seat bottoms are very thick.

According to the invention, however, a large load is mainly absorbed by the spring 33, and vibrations during the running of the vehicle are mainly absorbed by the viscous material damper 32. This eliminates the need to furnish the movable plate 13 with the zigzag springs, and reduces the thickness of the elastic member such as an urethane form, which is disposed on the movable plate 13. Additionally, this makes it possible to eliminate the need for the elastic member together with the zigzag springs if these are not required. Thus, the thickness of the seat bottom is greatly reduced and the configuration of the seat bottom is simplified.

## Claims

1. A vehicle seat comprising:
a base frame arranged to be attached to a vehicle body;
a plate-like movable plate mounted to a front bracket of the base frame by a front mounting shaft, said movable plate being rotatable such that the rear end of the movable plate rotates vertically about the front mounting shaft; and
a cushioning mechanism disposed between the base frame and the movable plate;
wherein said cushioning mechanism includes an upper connector connected to the movable plate and a lower connector connected to the base frame;
wherein said upper connector and said lower connector are coupled to each other by a viscous material damper and a spring, said viscous material damper being adapted to apply resistance to relative movement of the upper connector and the lower connector, and said spring being adapted to receive and support a load acting on the lower connector from the upper connector.

2. A vehicle seat according to claim 1, wherein the movable plate is furnished with a thin elastic member without disposing a zigzag spring.

3. A vehicle seat according to claim 1, wherein no zigzag spring or elastic member are disposed on an upper surface of the movable plate.
